# EUROPÄISCHE PATENTSCHRIFT

(11) **EP 3 669 098 B1**
(45) Veröffentlichungstag und Bekanntmachung des Hinweises auf die Patenterteilung: **19.01.2022**
(21) Anmeldenummer: 18750148.1
(22) Anmeldetag: 31.07.2018
(51) Int. Cl.: F16H 3/10, F16H 3/66, F16H 1/28

(54) **GETRIEBE**
TRANSMISSION
BOÎTE DE VITESSES

(30) Priorität: 14.08.2017 DE 102017214154
(43) Veröffentlichungstag der Anmeldung: 24.06.2020
(73) Patentinhaber: Robert Bosch GmbH, 70442 Stuttgart (DE)
(72) Erfinder: MOHAMED, Wael, 71282 Hemmingen (DE); ARMBRUSTER, Martin, 74336 Brackenheim (DE)
(86) Internationale Anmeldenummer: PCT/EP2018/070763
(87) Internationale Veröffentlichungsnummer: WO 2019/034413

(56) Entgegenhaltungen:
- EP-A1- 2 444 312
- DE-A1-102013 225 519
- DE-B3-102014 200 720
- US-A- 3 282 131

## Beschreibung

### Stand der Technik

Die vorliegende Erfindung betrifft ein Getriebe. Insbesondere ist das Getriebe unter Last schaltbar. Außerdem betrifft die Erfindung ein Antriebssystem umfassend ein derartiges Getriebe.

Aus dem Stand der Technik ist eine Vielzahl von Getriebekonzepten bekannt. Insbesondere im Fahrzeugbereich, beispielsweise im PKW-Bereich oder im LKW-Bereich sind viele unterschiedliche Getriebesysteme bekannt. Bekannte Getriebe weisen jedoch oftmals den Nachteil auf, dass diese nicht unter Last schaltbar sind. So muss eine zusätzliche Kupplung bereitgestellt werden, um einen Antriebsstrang zu unterbrechen. Nur auf diese Weise kann sichergestellt werden, dass zum Wechseln eines Gangs des Getriebes keine Last an dem Getriebe anliegt. Dieses Verfahren ist jedoch aufwendig und erhöht die Anzahl an Bauteilen, die versagen können oder gewartet werden müssen.

Aus der DE102013225519A1 ist eine Anordnung umfassend ein erstes Planetengetriebe und ein zweites Planetengetriebe, wo eine Eingangswelle des Getriebes mit einem ersten Sonnenrad des ersten Planetengetriebes drehfest verbunden ist, wo das zweite Planetengetriebe ein von dem ersten Planetengetriebe unterschiedliches Übersetzungsverhältnis aufweist. Das erste Planetengetriebe und das zweite Planetengetriebe einen gemeinsamen Planetenträger aufweisen. Zwischen dem Getriebegehäuse und einem ersten Hohlrad des ersten Planetengetriebes ein erstes Koppelelement vorhanden ist, und zwischen dem Getriebegehäuse und einem zweiten Hohlrad des zweiten Planetengetriebes ein zweites Koppelelement vorhanden ist, um das Getriebegehäuse und das erste und/oder zweite Hohlrad wahlweise drehfest miteinander zu verbinden oder zu trennen.

### Offenbarung der Erfindung

Durch das erfindungsgemäße Getriebe ist eine Lastschaltbarkeit gewährleistet.

Insbesondere ist das Getriebe wahlweise in einem ersten Gang oder einem zweiten Gang betreibbar. Dabei ist ein Gangwechsel jederzeit einfach und aufwandsarm ermöglicht.

Das erfindungsgemäße Getriebe umfasst ein erstes Planetengetriebe und ein zweites Planetengetriebe. Dabei ist vorgesehen, dass das erste Planetengetriebe und das zweite Planetengetriebe ein unterschiedliches Übersetzungsverhältnis aufweisen. Des Weiteren umfasst das Getriebe ein Getriebegehäuse. Dabei ist vorgesehen, dass das erste Planetengetriebe und das zweite Planetengetriebe einen gemeinsamen Planetenträger aufweisen. Dies bedeutet, dass ein gemeinsamer Planetenträger vorhanden ist, der sowohl Planetenräder des ersten Planetengetriebes als auch Planetenräder des zweiten Planetengetriebes trägt. Eine relative Bewegung von Planetenrädern des ersten Planetengetriebes zu den Planetenrädern des zweiten Planetengetriebes ist dadurch nicht möglich. Schließlich ist vorgesehen, dass das erste Planetengetriebe ein erstes Hohlrad aufweist. Das zweite Planetengetriebe weist ein zweites Hohlrad auf. Das erste Hohlrad und das zweite Hohlrad sind bevorzugt unabhängig voneinander. Das erste Hohlrad des ersten Planetengetriebes ist über einen Freilauf an dem Getriebegehäuse gelagert. Somit ist sowohl ein drehfestes Verbinden von erstem Hohlrad und Getriebegehäuse als auch eine Rotation des ersten Hohlrads gegenüber dem Getriebegehäuse ermöglicht. Der Freilauf hat dazu zwei Zustände. In einem blockierenden Zustand ist eine Rotation des ersten Hohlrads nicht möglich. Dagegen kann das erste Hohlrad in einem überholenden Zustand des Freilaufs gegenüber dem Getriebegehäuse rotiert werden. Erfindungsgemäß ist vorgesehen, dass eine Kraftübertragung in das Getriebegehäuse bei blockierendem Freilauf über das erste Hohlrad und bei überholendem Freilauf über das zweite Hohlrad erfolgt. Bei Verwendung von Planetengetrieben ist entweder ein Sonnenrad oder ein Planetenträger oder ein Hohlrad des Planetengetriebes gegenüber dem Getriebegehäuse abzustützen. Dies bedeutet, dass über eine der beschriebenen Komponenten eine Krafteinleitung in das Getriebegehäuse erfolgen muss. In dem erfindungsgemäßen Getriebe ist eine Krafteinleitung über das Hohlrad realisiert. Somit wird eine Krafteinleitung je nach Zustand des Freilaufs entweder über das erste Hohlrad oder das zweite Hohlrad realisiert. Da das erste Planetengetriebe und das zweite Planetengetriebe unterschiedliche Übersetzungsverhältnisse aufweisen, ist somit eine Gangschaltung ermöglicht, da das Getriebe je nach Zustand des Freilaufs eine geringere oder höhere Übersetzung aufweist.

Erfindungsgemäß ist zwischen dem Getriebegehäuse und dem zweiten Hohlrad ein Koppelelement vorhanden. Durch das Koppelelement ist das

Getriebegehäuse mit dem zweiten Hohlrad wahlweise drehfest verbindbar oder freigebbar. Auf diese Weise lässt sich insbesondere der Zustand des Freilaufs einstellen. Erfolgt keine Koppelung von zweitem Hohlrad und Getriebegehäuse, das bedeutet, ist das zweite Hohlrad gegenüber dem Getriebegehäuse frei rotierbar, so greift der Freilauf. Somit geht der Freilauf in den blockierenden Zustand über, wodurch eine Krafteinleitung in das Getriebegehäuse durch das erste Hohlrad erfolgt. Das zweite Hohlrad kann frei rotieren. Wird hingegen durch das Koppelelement das Getriebegehäuse drehfest mit dem zweiten Hohlrad verbunden, so wird der Freilauf in einen überholenden Zustand überführt. Dies bedeutet, dass das erste Hohlrad gegenüber dem Getriebegehäuse frei rotiert, während eine Krafteinleitung in das Getriebegehäuse über das zweite Hohlrad erfolgt.

Erfindungsgemäß weist das Getriebe eine Eingangswelle und eine Ausgangswelle auf. Die Eingangswelle ist mit einem ersten Sonnenrad des ersten Planetengetriebes drehfest verbunden, während die Ausgangswelle mit einem zweiten Sonnenrad des zweiten Planetengetriebes drehfest verbunden ist. Somit erfolgt ein Eingang und ein Ausgang des Getriebes über die Sonnenräder der ersten Planetengetriebe und zweiten Planetengetriebe. Dies bedeutet weiterhin, dass über den gemeinsamen Planetenträger eine Kraftübertragung zwischen erstem Planetengetriebe und zweitem Planetengetriebe erfolgt. Über das erste Hohlrad und das zweite Hohlrad wird ein Übersetzungsverhältnis des Getriebes eingestellt, indem wahlweise entweder das erste Hohlrad oder das zweite Hohlrad drehfest mit dem Getriebegehäuse verbunden wird.

Die Unteransprüche haben bevorzugte Weiterbildungen der Erfindung zum Inhalt.

Besonders vorteilhaft ist das Koppelelement eine Lamellenkupplung und/oder ein Bremselement. Das Betätigen der Lamellenkupplung und des Bremselements ist auch dann möglich, wenn eine Last auf das Getriebe wirkt. Dies bedeutet, dass eine Lastschaltbarkeit des Getriebes einfach und aufwandsarm realisiert ist. Somit sind keine zusätzlichen Maßnahmen notwendig, um das Getriebe von einem Antriebsstrang, beispielsweise eines Fahrzeugs, zu trennen, um einen Gangwechsel durchzuführen. Vielmehr kann der Gangwechsel im laufenden Betrieb, das bedeutet unter Last, durchgeführt werden. Hierzu ist lediglich die Lamellenkupplung und/oder das Bremselement zu öffnen oder zu schließen.

In einer bevorzugten Ausführungsform ist das Übersetzungsverhältnis des ersten Planetengetriebes größer als ein Übersetzungsverhältnis des zweiten Planetengetriebes. Dies bedeutet insbesondere, dass das erste Hohlrad einen größeren Durchmesser und/oder eine größere Zähnezahl aufweist als das zweite Hohlrad. Somit lässt sich ein Gangwechsel von einem niedrigen Gang in einen hohen Gang einfach und aufwandsarm ausführen.

Besonders vorteilhaft ist vorgesehen, dass das erste Sonnenrad des ersten Planetengetriebes und das zweite Sonnenrad des zweiten Planetengetriebes einen gleich großen Durchmesser und/oder eine gleich große Zähnezahl aufweisen. Somit ist ein Übersetzungsverhältnis lediglich durch die Planetenräder und die Hohlräder definiert. Dadurch ist der Aufbau des Getriebes einfach und kostengünstig.

Die Eingangswelle ist vorteilhafterweise koaxial zu der Ausgangswelle orientiert. Somit ist das Getriebe aufwandsarm und platzsparend in einem Antriebssystem bereitstellbar. Insbesondere kann das Getriebe in eine bestehende Welle integriert werden, indem besagte Welle unterbrochen wird und somit als Eingangswelle und Ausgangswelle des Getriebes fungiert. Durch die Verwendung des ersten Planetengetriebes und des zweiten Planetengetriebes ist insbesondere ein platzsparender Aufbau des Getriebes in einer Richtung parallel zu der Eingangswelle und der Ausgangswelle ermöglicht. Somit kann das Getriebe einfach und platzsparend bereitgestellt werden, wobei gleichzeitig eine vorteilhafte Lastschaltbarkeit gegeben ist.

Der gemeinsame Planetenträger umfasst eine Vielzahl von ersten Planetenrädern und zweiten Planetenrädern. Dabei ist vorgesehen, dass die ersten Planetenräder mit dem ersten Hohlrad und dem ersten Sonnenrad kämmen, während die zweiten Planetenräder mit dem zweiten Hohlrad und dem zweiten Sonnenrad kämmen. Dabei ist vorgesehen, dass die ersten Planetenräder einen größeren Durchmesser und/oder eine größere Zähnezahl aufweisen als die zweiten Planetenträger. Auf diese Weise wird insbesondere die zuvor beschriebene unterschiedliche Übersetzung von erstem Planetengetriebe und zweitem Planetengetriebe realisiert. Insbesondere ist durch eine derartige Anordnung ein Übersetzungsverhältnis des ersten Planetengetriebes größer als ein Übersetzungsverhältnis des zweiten Planetengetriebes. Das Definieren des Übersetzungsverhältnisses erfolgt somit ausschließlich durch Hohlrad und Planetenträger, nicht jedoch durch die Sonnenräder, die sowohl im Falle des ersten Planetengetriebes als auch im Falle des zweiten Planetengetriebes jeweils gleich groß sind.

Die Erfindung betrifft weiterhin ein Antriebssystem, insbesondere ein Antriebssystem eines Fahrzeugs. Das Antriebssystem umfasst eine erste Stirnradstufe und eine zweite Stirnradstufe, wobei ein Getriebe wie zuvor beschrieben zwischen der ersten Stirnradstufe und der zweiten Stirnradstufe angeordnet ist. Wie zuvor bereits beschrieben, kann das Getriebe vorteilhafterweise optimal in eine vorhandene Welle integriert werden. Somit ist das Getriebe vorteilhafterweise in eine Verbindungswelle von erster Stirnradstufe und zweiter Stirnradstufe angeordnet. Damit ist eine Lastschaltbarkeit gegeben, so dass ein Gangwechsel auch während des Betriebs des Antriebssystems erfolgen kann, das bedeutet, während das Antriebssystem eine Antriebskraft ausübt.

Vorteilhafterweise umfasst das Antriebssystem eine E-Maschine, wobei die E-Maschine mit der ersten Stirnradstufe gekoppelt ist. Somit steht ein elektrisches Antriebssystem zur Verfügung, durch das insbesondere ein Fahrzeug antreibbar ist. Durch die Lastschaltbarkeit des Getriebes und das Vorsehen einer E-Maschine als Antrieb ist insbesondere ein durchgängig unterbrechungsfreies Ausgeben eines Antriebsmoments ermöglicht.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine schematische Ansicht eines Getriebes gemäß einem Ausführungsbeispiel der Erfindung, und
- Figur 2: eine schematische Ansicht eines Antriebssystems gemäß einem Ausführungsbeispiel der Erfindung.

### Ausführungsformen der Erfindung

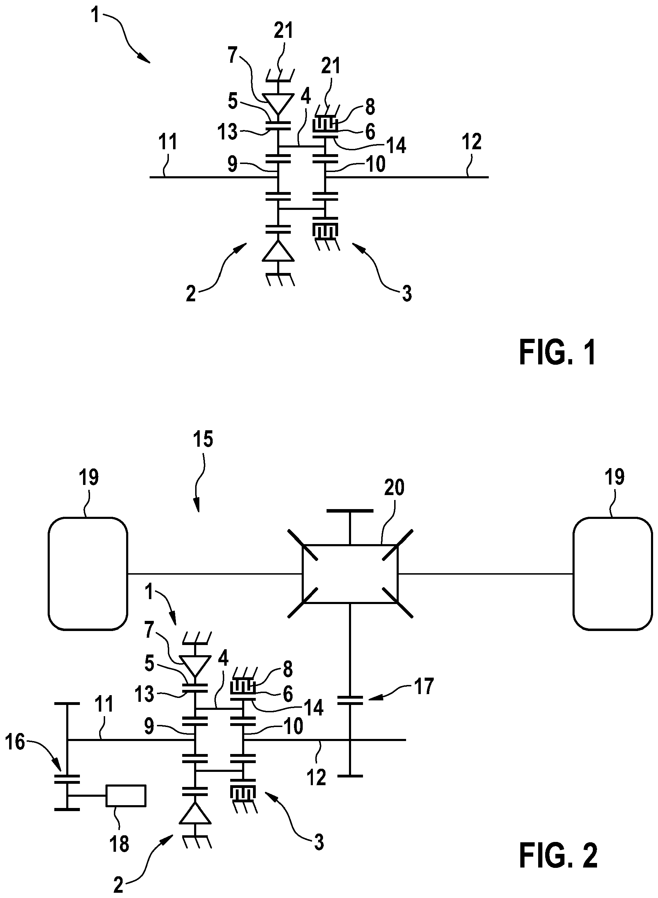

Figur 1 zeigt schematisch ein Getriebe 1 gemäß einem Ausführungsbeispiel der Erfindung. Das Getriebe 1 umfasst eine Eingangswelle 11 und eine Ausgangswelle 12, wobei die Eingangswelle 11 und die Ausgangswelle 12 koaxial zueinander angeordnet sind. Über die Eingangswelle 11 ist ein Drehmoment in das Getriebe 1 einbringbar, während über die Ausgangswelle 12 ein von dem Getriebe 1 gewandeltes Drehmoment ausgegeben werden kann.

Das Getriebe 1 umfasst ein erstes Planetengetriebe 2 und ein zweites Planetengetriebe 3, die über die Planetenräder 13, 14 gekoppelt sind. Dies bedeutet, dass erste Planetenräder 13 des ersten Planetengetriebes 2 und zweite Planetenräder 14 des zweiten Planetengetriebes 3 an einem gemeinsamen Planetenträger 4 angeordnet sind. Somit ist insbesondere nicht möglich, die ersten Planetenräder 13 gegenüber den zweiten Planetenrädern 14 relativ zu bewegen.

Das erste Planetengetriebe 1 umfasst ein erstes Hohlrad 5 sowie ein erstes Sonnenrad 9. Das zweite Planetengetriebe 3 umfasst ein zweites Hohlrad 6 sowie ein zweites Sonnenrad 10. Dabei ist vorgesehen, dass das erste Sonnenrad 9 identisch zu dem zweiten Sonnenrad 10 ausgebildet ist.

Das erste Planetengetriebe 2 weist bevorzugt ein höheres Übersetzungsverhältnis als das zweite Planetengetriebe 3 auf. Dies wird dadurch erreicht, dass das erste Hohlrad 5 einen größeren Durchmesser und/oder eine größere Zähnezahl als das zweite Hohlrad 6 aufweist. Ebenso ist vorgesehen, dass die ersten Planetenräder 13 einen größeren Durchmesser und/oder eine größere Zähnezahl als die zweiten Planetenräder 14 aufweisen.

Über das erste Hohlrad 5 und das zweite Hohlrad 6 ist eine Krafteinleitung in ein Getriebegehäuse 21 ermöglicht. Das Getriebegehäuse 21 ist insbesondere positionsfest angeordnet, so dass durch drehfestes Verbinden von erstem Hohlrad 5 oder zweitem Hohlrad 6 mit dem Getriebegehäuse 21 ein Stillstand des ersten Hohlrads 5 oder des zweiten Hohlrads 6 erreicht werden kann. Durch wahlweises Verbinden von erstem Hohlrad 5 und zweiten Hohlrad 6 mit dem Getriebegehäuse 21 lässt sich somit eine Übersetzung des Getriebes 1 einstellen.

In einem ersten Gang wird das zweite Hohlrad 6 mit dem Getriebegehäuse 21 drehfest verbunden. Somit bildet sich eine kleine Übersetzung, da das erste Hohlrad 5 gegenüber dem Getriebegehäuse 21 frei rotieren kann. In einem zweiten Gang hingegen wird das erste Hohlrad 5 drehfest mit dem Getriebegehäuse 21 gekoppelt. Somit bildet sich eine große Übersetzung, wobei das zweite Hohlrad 6 frei gegenüber dem Getriebegehäuse 21 rotiert.

Um den Schaltvorgang zu vereinfachen, ist ein Freilauf 7 vorhanden, wobei der Freilauf 7 zwischen erstem Hohlrad 5 und Getriebegehäuse 21 vorhanden ist. Ebenso ist ein Element 8 in Form eines Bremselements und/oder einer Lamellenkupplung zwischen dem zweiten Hohlrad 6 und dem Getriebegehäuse 21 angebracht. Somit kann lediglich durch Betätigen des Koppelelements 8 zwischen einem ersten Gang und einem zweiten Gang gewechselt werden.

Der zuvor beschriebene erste Gang wird dadurch erreicht, dass das Koppelelement 8 das zweite Hohlrad 6 mit dem Getriebegehäuse 21 drehfest verbindet. Dies führt dazu, dass der Freilauf 7 überholt wird, wodurch die zuvor beschriebene freie Rotation des ersten Hohlrads 5 gegenüber dem Getriebegehäuse 21 realisiert wird. Eine Krafteinleitung erfolgt über das Koppelelement 8 und das zweite Hohlrad 6 in das Getriebegehäuse 21.

Soll der zuvor beschriebene zweite Gang eingelegt werden, so wird das Koppelelement 8 freigegeben, wodurch keine drehfeste Verbindung von zweitem Hohlrad 6 und Getriebegehäuse 21 vorhanden ist. Dies führt dazu, dass der Freilauf 7 greift und somit das erste Hohlrad 5 blockiert. Diese Blockade des ersten Hohlrads 5 bewirkt ein drehfestes Verbinden von erstem Hohlrad 5 und Getriebegehäuse 21. Auf diese Weise ist erreicht, dass eine Krafteinleitung in das Getriebegehäuse 21 nur durch das erste Hohlrad 5 und den Freilauf 7 erfolgt. Das zweite Hohlrad 6 kann aufgrund des nichtaktiven Koppelelements 8 gegenüber dem Getriebegehäuse 21 frei rotieren.

Figur 2 zeigt schematisch ein Antriebssystem 15 eines Fahrzeugs gemäß einem Ausführungsbeispiel der Erfindung. Das Antriebssystem 15 umfasst das in Figur 1 gezeigte Getriebe 1. Dabei ist vorgesehen, dass das Antriebssystem 15 eine erste Stirnradstufe 16 und eine zweite Stirnradstufe 17 umfasst, wobei das Getriebe 1 zwischen der ersten Stirnradstufe 16 und der zweiten Stirnradstufe 17 angebracht ist. Dies bedeutet, dass die Eingangswelle 11 mit der ersten Stirnradstufe 16 gekoppelt ist, während die Ausgangswelle 12 mit der zweiten Stirnradstufe 17 gekoppelt ist.

Die erste Stirnradstufe 16 ist weiterhin mit einem Antriebsmotor, insbesondere einer E-Maschine 18 gekoppelt. Die E-Maschine 18 kann somit über die erste Stirnradstufe 16 die Eingangswelle 11 des Getriebes 1 rotieren. Die zweite Stirnradstufe 17 ist vorteilhafterweise mit einem Differentialgetriebe 20 von Antriebsrädern 19 eines Fahrzeugs verbunden. Somit ist von der Ausgangswelle 12 ein Drehmoment über die zweite Stirnradstufe 17 auf das Differentialgetriebe 20 übertragbar. Das gesamte Antriebssystem 15 ist somit vorteilhafterweise ein elektrisches Antriebssystem eines Fahrzeugs.

Durch die Verwendung der E-Maschine 28 und der Verwendung des Getriebes 1 ist erreichbar, dass ein zugkraftunterbrechungsfreier Betrieb des Antriebssystem 15 ermöglichst ist. Das Getriebe 1 ist aufgrund der Verwendung von zwei Planetengetrieben 2, 3 lastschaltbar, da lediglich das Kopplungselement 8 aktiviert oder deaktiviert werden muss. Dies kann insbesondere auch unter Last erfolgen. Dadurch ist es ermöglicht, keine zusätzlichen Maßnahmen wie beispielsweise eine Kupplung vorzusehen, um einen Gangwechsel zu ermöglichen. Der Gangwechsel kann, wie zuvor bereits beschrieben, einfach und aufwandsarm direkt unter Last erfolgen. Dies führt dazu, dass keinerlei Unterbrechung des Aufbringens eines Antriebsdrehmoments auf das Differentialgetriebe 20 erfolgt.

Das Antriebssystem 15 ist optimal für Fahrzeuge, insbesondere für PKW und LKW geeignet. Insbesondere ist das Antriebssystem 15 zur Verwendung als elektrisches Antriebssystem geeignet. Andere, insbesondere konventionelle, Antriebsmethoden sind ebenfalls möglich. In diesem Fall ist die E-Maschine 18 durch einen entsprechenden anderen Antrieb, beispielsweise durch einen Verbrennungsmotor, zu ersetzen.

## Patentansprüche

1. Getriebe (1) umfassend
- ein erstes Planetengetriebe (2) und ein zweites Planetengetriebe (3), wobei eine Eingangswelle (11) des Getriebes (1) mit einem ersten Sonnenrad (9) des ersten Planetengetriebes (2) drehfest verbunden ist, und ein Getriebegehäuse (21),
- wobei das zweite Planetengetriebe (3) ein von dem ersten Planetengetriebe (2) unterschiedliches Übersetzungsverhältnis aufweist und
- das erste Planetengetriebe (2) und das zweite Planetengetriebe (3) einen gemeinsamen Planetenträger (4) aufweisen, und
- ein erstes Hohlrad (5) des ersten Planetengetriebes (2) über einen Freilauf (7) an dem Getriebegehäuse (21) gelagert ist und zwischen dem Getriebegehäuse (21) und einem zweiten Hohlrad (6) des zweiten Planetengetriebes (3) ein Koppelelement (8) vorhanden ist, um das Getriebegehäuse (21) und das zweite Hohlrad (6) wahlweise drehfest miteinander zu verbinden oder zu trennen,
- und eine Ausgangswelle (12) des Getriebes (1) mit einem zweiten Sonnenrad (10) des zweiten Planetengetriebes (3) drehfest verbunden ist.

2. Getriebe (1) nach Anspruch 1, **dadurch gekennzeichnet, dass** das Koppelelement (8) eine Lamellenkupplung und/oder ein Bremselement umfasst.

3. Getriebe (1) nach einem der vorhergehenden Ansprüche, **dadurch gekennzeichnet, dass** ein Übersetzungsverhältnis des ersten Planetengetriebes (2) größer ist als ein Übersetzungsverhältnis des zweiten Planetengetriebes (3).

4. Getriebe (1) nach Anspruch 1, **dadurch gekennzeichnet, dass** das erste Sonnenrad (9) des ersten Planetengetriebes (2) und das zweite Sonnenrad (10) des zweiten Planetengetriebes (3) einen gleich großen Durchmesser und/oder eine gleich große Zähnezahl aufweisen.

5. Getriebe (1) nach Anspruch 1 oder 4, **dadurch gekennzeichnet, dass** die Eingangswelle (11) koaxial zu der Ausgangswelle (12) orientiert ist.

6. Getriebe (1) nach einem der vorhergehenden Ansprüche, **dadurch gekennzeichnet, dass** der gemeinsame Planetenträger (4) eine Vielzahl von ersten Planetenrädern (13) und zweiten Planetenrädern (14) umfasst, wobei die ersten Planetenräder (13) mit dem ersten Hohlrad (5) und die zweiten Planetenräder (14) mit dem zweiten Hohlrad (6) kämmen, und wobei die ersten Planetenräder (13) einen größeren Durchmesser und/oder eine größere Zähnezahl als die zweiten Planetenräder (14) aufweisen.

7. Antriebssystem (15) umfassend eine erste Stirnradstufe (16) und eine zweite Stirnradstufe (17), wobei ein Getriebe (1) nach einem der vorhergehenden Ansprüche zwischen erster Stirnradstufe (16) und zweiter Stirnradstufe (17) angeordnet ist.

8. Antriebssystem (15) nach Anspruch 7, **gekennzeichnet durch** eine E-Maschine (18), wobei die E-Maschine mit der ersten Stirnradstufe (16) gekoppelt ist.

## Claims

1. Transmission (1) comprising
- a first planetary transmission (2) and a second planetary transmission (3), an input shaft (11) of the transmission (1) being connected fixedly to a first sun gear (9) of the first planetary transmission (2) for conjoint rotation, and
a transmission housing (21),
- the second planetary transmission (3) having a transmission ratio which is different from the first planetary transmission (2), and
- the first planetary transmission (2) and the second planetary transmission (3) having a common planetary carrier (4), and
- a first internal gear (5) of the first planetary transmission (2) being mounted via a freewheel (7) on the transmission housing (21), and there being a coupling element (8) between the transmission housing (21) and a second internal gear (6) of the second planetary transmission (3), in order to selectively connect the transmission housing (21) and the second internal gear (6) fixedly to one another for conjoint rotation or to disconnect them,
- and an output shaft (12) of the transmission (1) being connected fixedly to a second sun gear (10) of the second planetary transmission (3) for conjoint rotation.

2. Transmission (1) according to Claim 1, **characterized in that** the coupling element (8) comprises a multiple disc clutch and/or a brake element.

3. Transmission (1) according to either of the preceding claims, **characterized in that** a transmission ratio of the first planetary transmission (2) is greater than a transmission ratio of the second planetary transmission (3).

4. Transmission (1) according to Claim 1, **characterized in that** the first sun gear (9) of the first planetary transmission (2) and the second sun gear (10) of the second planetary transmission (3) have a diameter of equal size and/or an identical number of teeth.

5. Transmission (1) according to Claim 1 or 4, **characterized in that** the input shaft (11) is oriented coaxially with respect to the output shaft (12).

6. Transmission (1) according to one of the preceding claims, **characterized in that** the common planetary carrier (4) comprises a multiplicity of first planetary gears (13) and second planetary gears (14), the first planetary gears (13) meshing with the first internal gear (5) and the second planetary gears (14) meshing with the second internal gear (6), and the first planetary gears (13) having a greater diameter and/or a larger number of teeth than the second planetary gears (14).

7. Drive system (15) comprising a first spur gear stage (16) and a second spur gear stage (17), a transmission (1) according to one of the preceding claims being arranged between the first spur gear stage (16) and the second spur gear stage (17).

8. Drive system (15) according to Claim 7, **characterized by** an electric machine (18), the electric machine being coupled to the first spur gear stage (16).

## Revendications

1. Transmission (1) comprenant :
- un premier engrenage planétaire (2) et un deuxième engrenage planétaire (3), un arbre d'entrée (11) de la transmission (1) étant relié de manière immobile en rotation à une première roue solaire (9) du premier engrenage planétaire (2), et
un carter de transmission (21),
- le deuxième engrenage planétaire (3) présentant un rapport de transmission différent du premier engrenage planétaire (2) et
- le premier engrenage planétaire (2) et le deuxième engrenage planétaire (3) présentant un porte-satellites commun (4), et
- une première couronne (5) du premier engrenage planétaire (2) étant montée par l'intermédiaire d'une roue libre (7) sur le carter de transmission (21) et un élément de couplage (8) étant présent entre le carter de transmission (21) et une deuxième couronne (6) du deuxième engrenage planétaire (3), pour au choix relier l'un à l'autre de manière immobile en rotation ou séparer le carter de transmission (21) et la deuxième couronne (6),
- et un arbre de sortie (12) de la transmission (1) étant relié de manière immobile en rotation à une deuxième roue solaire (10) du deuxième engrenage planétaire (3).

2. Transmission (1) selon la revendication 1, **caractérisée en ce que** l'élément de couplage (8) comprend un embrayage à disques multiples et/ou un élément de freinage.

3. Transmission (1) selon l'une quelconque des revendications précédentes, **caractérisée en ce qu'**un rapport de transmission du premier engrenage planétaire (2) est supérieur à un rapport de transmission du deuxième engrenage planétaire (3).

4. Transmission (1) selon la revendication 1, **caractérisée en ce que** la première roue solaire (9) du premier engrenage planétaire (2) et la deuxième roue solaire (10) du deuxième engrenage planétaire (3) ont un même diamètre et/ou un même nombre de dents.

5. Transmission (1) selon la revendication 1 ou 4, **caractérisée en ce que** l'arbre d'entrée (11) est orienté coaxialement à l'arbre de sortie (12).

6. Transmission (1) selon l'une quelconque des revendications précédentes, **caractérisée en ce que** le porte-satellites commun (4) comprend une pluralité de premiers satellites (13) et de deuxièmes satellites (14), les premiers satellites (13) s'engrenant avec la première couronne (5) et les deuxièmes satellites (14) s'engrenant avec la deuxième couronne (6), et les premiers satellites (13) ayant un diamètre plus grand et/ou un nombre de dents plus grand que les deuxièmes satellites (14).

7. Système d'entraînement (15) comprenant un premier étage de roue cylindrique (16) et un deuxième étage de roue cylindrique (17), une transmission (1) selon l'une quelconque des revendications précédentes étant agencée entre le premier étage de roue cylindrique (16) et le deuxième étage de roue cylindrique (17).

8. Système d'entraînement (15) selon la revendication 7, **caractérisé par** un moteur électrique (18), le moteur électrique étant couplé au premier étage de roue cylindrique (16).
